# EUROPEAN PATENT SPECIFICATION

(11) **EP 0 968 579 B1**
(45) Date of publication and mention of the grant of the patent: **04.06.2003**
(21) Application number: 98909174.9
(22) Date of filing: 13.03.1998
(51) Int. Cl.: H04B 10/17, H01S 3/06

(54) **MULTIPLE STAGE OPTICAL FIBER AMPLIFIER**
MEHRSTUFIGER FASEROPTISCHER VERSTÄRKER
AMPLIFICATEUR A FIBRE OPTIQUE A ETAGES MULTIPLES

(30) Priority: 17.03.1997 US 819118
(43) Date of publication of application: 05.01.2000
(73) Proprietor: JDS Uniphase Corporation, San Jose, CA 95131 (US)
(72) Inventor: GRUBB, Stephen, G., Columbia, MD 21045 (US)
(74) Representative: Grünecker, Kinkeldey, Stockmair & Schwanhäusser Anwaltssozietät
(86) International application number: US9804974
(87) International publication number: WO98042088

(56) References cited:
- EP-A- 0 339 840
- EP-A- 0 463 771
- EP-A- 0 647 000
- US-A- 5 506 723
- US-A- 5 530 583
- SEMENKOFF M ET AL: "HIGH POWER, HIGH GAIN OPTICAL FIBRE AMPLIFIER FOR MULTIWAVELENGTH TRANSMISSION SYSTEMS" ELECTRONICS LETTERS, vol. 30, no. 17, 18 August 1994, pages 1411-1413, XP000476033
- AIDA K ET AL: "DESIGN AND PERFORMANCE OF A LONG-SPAN IM/DD OPTICAL TRANSMISSION SYSTEM USING REMOTELY PUMPED OPTICAL AMPLIFIERS" IEE PROCEEDINGS J. OPTOELECTRONICS, vol. 137, no. 4, 1 August 1990, pages 225-229, XP000148979
- ATENTZ A J ET AL: "RAMAN AMPLIFIER WITH IMPROVED SYSTEM PERFORMANCE" OPTICAL FIBER COMMUNICATION (OFC) 1996, SAN JOSE, FEB. 25 - MAR. 1, 1996, vol. VOL. 2, no. CONG. 19, 25 February 1996, OPTICAL SOCIETY OF AMERICA, page 16/17 XP000672498

## Description

### FIELD OF THE INVENTION

This invention relates generally to optical fiber amplifiers and, more particularly to, low noise, high power optical fiber amplifier circuits.

### BACKGROUND OF THE INVENTION

As is known in the art, an optical amplifier is a device that increases the amplitude of an input optical signal fed thereto. If the optical signal at the input to such an amplifier is monochromatic, the output will also be monochromatic, with the same frequency. A conventional fiber amplifier comprises a gain medium, such as a single mode glass fiber doped with a rare earth material, connected to a WDM coupler which provides low insertion loss at both the input signal and pump wavelengths. The input signal is provided, via the coupler, to the medium. Excitation occurs through optical pumping from the pumping source, which is combined with the optical input signal within the coupler, which is within the absorption band of the rare earth dopant, and an amplified output signal is emitted from the other end of the fiber.

Such amplifiers are typically used in a variety of applications including but not limited to amplification of weak optical pulses such as those that have traveled through a long length of optical fiber in communication systems. Optical amplification can take place in a variety of materials including those materials, such as silica, from which optical fibers are formed.

One type of fiber amplifier referred to as an erbium (Er) amplifier typically includes a silica fiber having a single-mode core doped with erbium (specifically doped with erbium ions conventionally denoted as Er³⁺). It is well known that an erbium optical fiber amplifier operating in its standard so-called three level mode is capable, when pumped at a wavelength of 980 nanometers (nm), of amplifying optical signals having a wavelength of approximately 1.5 micrometers (µm). Since 1.5 µm is the lowest loss wavelength of conventional single-mode glass fibers, erbium amplifiers are well suited for inclusion in fiber systems that propagate optical signals having wavelengths around 1.5 µm.

However, there are several limitations with erbium fiber amplifiers used in practical communication systems. One problem is that is that the gain characteristic is relatively uniform only within a relatively narrow gain bandwidth. In addition, the output power characteristic developed by erbium amplifiers is limited by the range of power available from pump sources used to pump the fiber. Also, with the advent of dense wavelength division multiplexed (WDM) systems, the available gain bandwidth and uniformity of gain flatness has become a critical issue in optical amplifier design.

Another type of well-known optical fiber amplifier is a so-called Raman amplifier. A Raman amplifier provides amplification of signals, via stimulated Raman scattering in an optical fiber, and does not have the gain bandwidth problems associated with erbium amplifiers. One problem with Raman amplifiers, however, is that they are relatively inefficient and thus must be pumped with pump signals having relatively high power levels in order to obtain suitable output power. Much of the energy from the high power pump signals is not utilized and becomes wasted and, even when pumped with high power pump signals, the Raman amplifier provides output signals having relatively low power levels due to the inefficient use of the energy provided by the pump signal. This is especially true when the Raman amplifier is not operated in its "saturation mode".

Another problem with Raman amplifiers is that the upper atomic energy level of the amplifier has essentially a zero lifetime. In a wave division multiplexed system, the rapid depletion of the upper amplifier energy level can result in crosstalk between the required high power pump signal and an input signal to be amplified.

D1 (Aida K, et al, "Design and performance of a long-span IM/DD optical transmission system using remotely pumped optical amplifiers" from *IEE Proceedings J. Optoelectronics,* vol. 137, no. 4, 1 August 1990, pages 225.229) discloses the design and performance of a long span IM/Dd optical transmission system using remotely pumped optical amplifiers. At the receiver side of the optical transmission system, the Er-doped fiber is followed by a 34 km dispersion shifted fiber wherein both optical amplifiers are provided with pump light emitted from 1.45-1.49 µm laser diodes.

D2 (US 5 506 723 A) describes a two stage fiber optical amplifier in which a first and a second section of optical fibers are formed of erbium-doped fiber cores and both amplifier stages are pumped opposite to or in the direction of propagation of the optical signal.

D3 (EP 0 463 771 A) discloses a multistage optical amplifier comprising at least two states of amplification where each stage includes an amplifying fiber having an erbium-doped fiber core with a different gain spectrum. The two stages may be pumped separately and the gain of each stage may be adjusted individually.

D4 (EP 0 647 000 A) discloses a two stage optical amplifier wherein both amplifier stages contain an erbium-doped fiber core. The length of the fiber of the first stage optical amplifier is optimized so as to achieve low noise and sufficient gain so that the noise figure of the two stage amplifier as a whole is determined primarily by that of the first stage.

It would therefore be desirable to provide an optical fiber amplifier having a relatively wide bandwidth, a relatively low noise characteristic and a relatively high output power characteristic.

### SUMMARY OF THE INVENTION

It is the object of the present invention to improve an optical fiber amplifier with respect to bandwidth, noise characteristic and output power. This object is achieved by providing a multi-stage optical amplifier unit according to claim 1.

In accordance with one embodiment, a pump signal is injected into the first amplifier stage at the connection between the first and second stages and propagates in a direction opposite to the input signals. The first amplifier stage does not completely absorb the pump signal so that it does not saturate and an optical path may also be provided to apply the excess pump signal to the second amplifier stage to pump it. The optical path Is arranged so that the pump signal also propagates in a direction opposite to input signals in the second amplifier stage.

In accordance with another embodiment, a pump signal is injected into the second amplifier stage and propagates in a direction opposite to input signals. The second amplifier stage does not completely absorb the pump signal and a separate optical path is provided to apply the excess pump signal to the first amplifier stage to pump it. The pump signal also propagates in a direction opposite to input signals in the first amplifier stage.

In accordance with still another embodiment, the first fiber amplifier stage is a Raman amplifier and the second amplifier stage is a rare earth doped fiber amplifier. The gain and bandwidth characteristics of the Raman amplifier stage are selected by choosing the wavelengths of the pump signals so that the Raman amplifier stage has a relatively low noise characteristic. The rare earth doped amplifier stage, on the other hand, is designed to have a relatively high power characteristic. Furthermore, to increase the gain bandwidth of the entire optical amplifier, the gain bandwidth characteristics of the first and second amplifier stages are selected to overlap rather than coincide.

For example, the wavelengths of the pump signals may be selected such that the gain characteristic provided by the Raman amplifier stage complements the gain characteristic of the rare earth doped amplifier stage . This provides an amplifier having a high gain characteristic and a low noise characteristic over a relatively wide bandwidth. In addition, the power levels of the pump signals may be selected such that the Raman amplifier operates in an unsaturated amplifier mode. Since the Raman amplifier does not efficiently use all of the power of the pump signals, the excess pump signal power from the Raman amplifier stage pumps the rare earth doped amplifier. Thus the consequences of the inefficiency of the Raman amplifier are minimized since the pump signals are recycled to pump the rare earth amplifier.

Moreover, the pump signals are arranged to propagate through the Raman amplifier stage and the rare earth doped amplifier stage in a direction which is opposite to the direction in which the input signal propagates through the amplifier stages. This minimizes crosstalk between the input signal and the pump signals. Such minimization of crosstalk results because the walk-off characteristic between the input signal and pump signal is large and, accordingly, the pump-mediated signal crosstalk mechanism is thus defeated.

In one embodiment, the rare earth doped amplifier stage may use an erbium-doped silica fiber or, in an alternate embodiment, an erbium-doped fluoride fiber. Since a fluoride fiber provides amplification to signals having relatively long wavelengths, use of a fluoride fiber may increase the overall amplifier gain bandwidth. In another embodiment, two pump signals having wavelengths of 1435 nm and 1465 nm, respectively, are used to pump the Raman amplifier stage. This approach results in the optical amplifier having a relatively wide and flat gain characteristic with a gain bandwidth of 50 nm or greater.

In yet another embodiment, two pump frequencies are used to pump the multiple stage amplifier.

In still another embodiment, a single pump source is used to pump the Raman amplifier stage. The pump source may be a Raman fiber laser which provides an output signal having a wavelength typically of about 1480 nm. Alternatively, the single pump source may be provided as two high-power diodes which provide an output signal having a wavelength typically of about 1480, nm.

In a comparative example, the first amplifier stage is an erbium doped fiber amplifier and the second stage is a Raman amplifier.

In a comparative example, the first amplifier stage is a fiber amplifier with a thulium doped ZBLAN core and the second stage is an erbium/ytterbium doped fiber amplifier The first amplifier stage is cladding pumped from a 1.06 µm pump source.

In a further comparative example, the first amplifier stage is a fiber amplifier with a phraseodymium doped ZBLAN core and the second amplifier stage is an erbium/ytterbium doped fiber amplifier. The first amplifier stage is cladding pumped form a 1.04 µm pump source.

In a further embodiment, an optical amplifier unit further comprises a second stage fiber amplifier comprising a fiber core with an active dopant in the fiber core; and two optical coupling paths formed between the first and second stage fiber amplifiers, the first coupling path between the first stage fiber amplifier and the second stage fiber amplifier providing the input signal as an input to the second stage fiber amplifier from an output of the first stage fiber amplifier and the second coupling path providing for transfer of pumping power from the first stage fiber amplifier to the second stage fiber amplifier for pumping the second stage fiber amplifier, wherein the combination of the dual gain spectra of the Raman amplifier and the second stage fiber amplifier providing for a total gain spectrum for the optical amplifier unit over a bandwidth of tens of nanometers. In a further embodiment, the Raman amplifier has a dispersion compensating fiber core.

In a further embodiment, a second stage fiber amplifier has a rare earth doped fiber core.

In a further embodiment, the first and second spectrum bands partially overlap.

In a further embodiment, the first and second spectrum bands are adjacent and have substantially no overlap.

In a further embodiment, the first and second spectrum bands do not overlap.

In a further embodiment, a first optical fiber amplifier is optically coupled to a second optical fiber amplifier via a third optical fiber, the pump element being directly coupled to the first optical fiber amplifier for pumping and being coupled to the second optical fiber amplifier via the third optical fiber for pumping.

In a further embodiment, the Raman gain medium is selected to provide a wide gain bandwidth.

In a further embodiment, the high power pump element comprises a plurality of pump elements, each having an output and a wave division multiplexer for combining the pump element outputs together for input to the first stage fiber amplifier.

In a further embodiment, each of the plurality of pump elements is a laser diode having an output wavelength within the absorption bands of the first and second stage fiber amplifiers.

In a further embodiment, each of the plurality of pump elements comprises a fiber laser.

In a further embodiment, an optical amplifier unit further comprises a first isolator having a first port coupled to the second port of the second wave division multiplexer and having a second port coupled to the input port of the second stage fiber amplifier.

In a further embodiment, an optical amplifier unit further comprises a second isolator having a first port coupled to the second port of the third wave division multiplexer and an output port coupled to the output port of the optical amplifier circuit

In a further embodiment, the second stage fiber amplifier comprises one of: a silica fiber, and a fluoride fiber.

In a further embodiment, said pump element comprises an output port coupled to the third port of the first wave division multiplexer.

In a further embodiment, an optical amplifier unit further comprises a fourth wave division multiplexer having a first input port and a second input port and having an output port coupled to the third input port of the second wave division multiplexer.

In a further embodiment, the pump element comprises a port coupled to the first input port of the fourth wave division multiplexer.

In a further embodiment, the pump element comprises a further port coupled to the second port of the fourth wave division multiplexer.

In a further embodiment, the pump element comprises one of: a Raman fiber laser; and a plurality of semiconductor laser diodes.

In a further embodiment, the pump element comprises a Raman fiber laser which emits a signal having a wavelength of 1480 nm.

In a further embodiment, the pump element comprises a pair of laser diodes, each of the laser diodes emitting a signal having a wavelength of 1480 nm.

In a further embodiment, the second isolator comprises a multistage isolator.

In a further embodiment, the second stage fiber amplifier first end is optically coupled to the second end of the first stage fiber amplifier through an optical isolator.

In a further comparative example, the first stage fiber amplifier comprises a rare earth doped amplifier.

In a further comparative example, the second stage fiber amplifier comprises a Raman amplifier.

In a further embodiment, said pump source comprises multiple pump elements with their outputs coupled together for input to the output end of said first stage fiber amplifier, said multiple pump elements broadening the gain bandwidth of the amplifier system. In a further embodiment, said multiple pump elements have different output wavelengths within the absorption band of said first and second stage fiber amplifiers.

In a further comparative example, the first and the second stage fiber amplifiers are fiber Raman amplifiers.

In a further embodiment, the first stage amplifier comprises at least two Raman fiber amplifiers.

According to a further aspect of the present invention, a further embodiment comprises at least two optical fiber amplifiers connected in series wherein the output of one stage provides input for another stage; the amplifiers characterized by having different types of gain mechanisms with pumping excitation provided from at least one pump source.

In a further comparative example, the first amplifier stage is a fiber amplifier with a thulium doped ZBLAN core and the second stage is an erbium/ytterbium doped fiber amplifier. The first amplifier stage is cladding pumped from a 1.06 µm pump source.

In still a further comparative example, the first amplifier stage is a fiber amplifier with a phraseodymium doped ZBLAN core and the second amplifier stage is an erbium/ytterbium doped fiber amplifier. The first amplifier stage is cladding pumped form a 1.04 µm pump source.

In a further comparative example, a first stage fiber amplifier operates within a first spectrum band, a second stage fiber amplifier operates within a second spectrum band different from the first spectrum band, wherein the first and the second stage fiber amplifiers are both pumped with pump radiation from more than one pump source.

In a further comparative example, an optical amplifier unit for amplifying an input signal comprises a fiber amplifier comprising a Raman amplifier for receiving the input signal; and at least two pump sources providing pumping power to the Raman amplifier at two different, spatially separated wavelengths to develop separate Raman gain spectra in the fiber amplifier.

### BRIEF DESCRIPTION OF THE DRAWING

The foregoing features of the invention, as well as the invention itself may be more fully understood from the following detailed description of the drawing, in which
FIG. 1 is a block diagram of an optical amplifier constructed in accordance with the principles of the present invention with a Raman amplifier first stage and a rare earth doped second stage.
FIG. 2 is a block diagram of a comparative example of an optical amplifier with a rare earth doped first stage and a Raman amplifier second stage.
FIG. 3 is a plot of the gain spectrum of the multiple stage amplifier illustrated in FIGs. 1 and 2.
FIG. 4 is a block diagram of a comparative example of an optical amplifier in which the first amplifier stage is a fiber amplifier with a thulium doped ZBLAN core and the second stage is an erbium/ytterbium doped fiber amplifier.
FIG. 5. is a plot of the gain spectrum of the multiple stage amplifier illustrated in FIG. 4.
FIG. 6 is a block diagram of a comparative example of an optical amplifier in which the first amplifier stage is a fiber amplifier with a praseodymium doped ZBLAN core and the second stage is an erbium/ytterbium doped fiber amplifier.
FIG. 7 is a plot of the gain spectrum of the multiple stage amplifier illustrated in FIG. 6.
FIG. 8 is a block diagram of an optical amplifier constructed in accordance with the principles of the present invention in which the pumping signals are applied to the second amplifier stage.

### DETAILED DESCRIPTION OF THE PREFERRED EMBODIMENTS

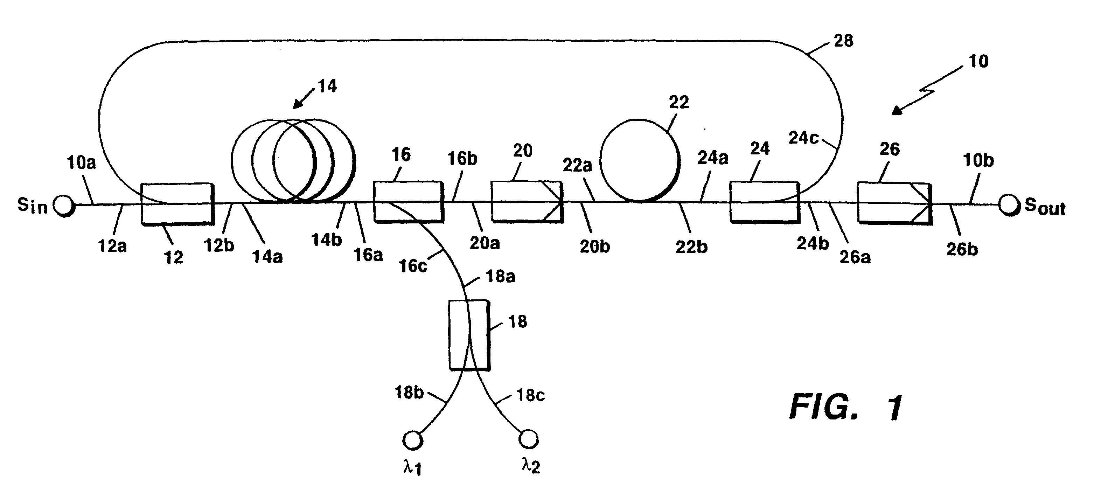

Referring now to FIG. 1, an optical amplifier 10 having an input port 10a and an output port 10b includes a first wave division multiplexer (WDM) 12 having an input port 12a coupled to amplifier input port 10a. An output port 12b of WDM 12 is coupled to an input port 14a of a Raman fiber amplifier 14 which serves as a first amplifier stage of amplifier 10. Raman amplifier 14 has a quantum-limited noise figure which causes optical amplifier 10 to have a relatively low noise figure. Amplifier 14 is comprised of a cladded optical fiber which may be, for example, a germano-silica fiber having a core diameter typically in the range of about 2 µm - 5 µm and having an insertion loss characteristic not greater than 0.6 decibels per kilometer (db/km) at a wavelength of about 1480 nm. Also, when the fiber is to amplify radiation of wavelength λₗ, where λₗ= λ_{i-1'}+ Δλₗ in which Δλₗ is a length within the appropriate Stokes band associated with the fiber, l=1, ... , n (n is an integer equal to or greater than 2) and λₗ₋₁ is defined to be the wavelength λₚ of the pump radiation when l=1, a fiber having a relatively high value of delta is preferred.

Amplifier 14 is coupled to an input port of an erbium-doped fiber amplifier 22 through a second WDM 16 and a first isolator 20. Specifically, an output port 14b of amplifier 14 is coupled to an input port 16a of second WDM 16 and an output port 16b of WDM 16 is coupled to an input port 20a of isolator 20. Isolator 20 is provided having an isolation characteristic typically of about 40 dB. An output port 20b of isolator 20 is coupled to a first input port 22a of erbium-doped (Er) amplifier 22 which provides a second amplifier stage of amplifier 10.

Er amplifier 22 is provided from a single mode fiber section having a core doped with Er³⁺ ions using conventional doping techniques. Although, in a preferred embodiment, second stage amplifier 22 is an Er amplifier, it should be appreciated that amplifier stage 22 may alternatively be fabricated from a single mode fiber having a core doped with a rare earth metal other than erbium. In addition, the fiber may be a silica glass fiber or, alternatively, fluoride glass compositions based on ZrF₄, for example ZBLA and ZBLAN; may also be used.

Amplifier stage 22 is pumped with a signal having a predetermined wavelength. The output of amplifier 22 is coupled to an input port 24a of a third WDM 24 and a first output port 24b of the WDM 24 is coupled to a second isolator 26 at an input port 26a. Isolator 26 may be provided, for example, as a multistage isolator having a relatively low insertion loss in a pass band which is at least as wide as the gain bandwidth provided by amplifier stages 14, 22. An output port 26b of isolator 26 is coupled to amplifier output port 10b.

A fourth WDM 18 has input ports 18a, 18b through which are fed respective ones of pump signals P₁, P₂ having respective wavelengths λ₁ and λ₂. An output port 18c of WDM 18 is coupled to a second input port 16c of WDM 16. Thus pump signals P₁, P₂ are fed through WDM 18 to input port 16c of WDM 16

The pump signals P₁, P₂ propagate through WDM 16 and pump Raman amplifier 14. An optical signal path 28 has a first end coupled to an output port of 12c of WDM 12 and a second end 28b coupled to a third port 24c of WDM 24.

In operation, pump signals P, and P₂ having respective wavelengths λ₁and λ₂ pump the Raman amplifier 14 at a level which is below the saturation level of the amplifier 14. Thus, the excess pump power from the first unsaturated Raman amplifier stage 14 is coupled via signal path 28 through WDM 24 and fed to the second amplifier stage 22 to thus pump the Er amplifier 22.

Consequently, the pump signal energy not used in the first amplifier stage 14 is used in the second amplifier stage 22. Thus, the Raman amplifier 14 is intentionally not operated in saturation mode because it is desirable to make the pump power provided by pump signals, P₁and P₂ , available to the second amplifier stage 22 where the pump power is used in a manner which is relatively efficient when compared with the efficiency with which the Raman amplifier 14 uses the pump signal. In typical applications, the percentage of the pump power fed to Raman amplifier 14 which is coupled through signal path 28 to the second stage amplifier 22 is in the range of about 40% to 90% with typically about 75% of the pump power being preferred.

As mentioned above, Raman amplifiers are relatively inefficient and thus require pump signals having a relatively high power level. This is especially true when the Raman amplifier is not pumped at a level which drives the amplifier into its saturation region. Thus, by utilizing signal path 28 to couple the pump power from the first amplifier stage to the second amplifier stage, the inefficiency and high power pump signal requirement of the Raman amplifier is mitigated.

Moreover, since the pump signal propagates through the Raman amplifier in a direction which is opposite that of the input signal, crosstalk between the pump signal and the input signal is minimized. This is due to the fact that the walk off between the input signal and pump signal is relatively large and thus pump-mediated signal crosstalk is reduced.

The gain and bandwidth characteristics of the Raman amplifier are determined by the spectral properties of the pump signal. Thus, the Raman amplifier can be designed to have preferred gain and bandwidth characteristics by appropriate selection of the wavelength and power characteristics of the pump signals, P₁ and P₂. It is relatively easy to modify the gain and bandwidth characteristics of the Raman amplifier 14 in this manner. This technique mitigates the drawback of the high pump power requirement of the Raman amplifier 22.

Moreover, the wavelength of the pump signals may be selected such that the gain of the Raman amplifier complements the gain of the Er amplifier at longer wavelengths, yet the pump signals can still be recycled through signal path 28 to pump the Er fiber in the second amplifier stage 22. For example, if the amplifier 22 had a gain characteristic which linearly decreased for signals having wavelengths between 1550 nm and 1570 nm, then the wavelengths of the pump signals P₁, P₂ could be selected to provide the Raman amplifier 14 having a gain characteristic which increased linearly between wavelengths of 1550 nm and 1570 .nm. Thus, the hybrid Raman amplifier/Er power amplifier configuration of optical amplifier 10 utilizes the advantages of each amplifier type to provide a relatively wide band, high gain, high power amplifier 10.

A still further improvement can be obtained by using a dispersion compensating fiber for the Raman gain fiber. Dispersion compensating fibers are well-known and can be used to reverse the dispersion of pulses caused by passage through conventional optical fibers.

If the second stage Er fiber is a fluoride fiber, it will provide gain at relatively long wavelengths and cause the amplifier 10 to have a wider bandwidth than it would have of a silica fiber were used in the second stage amplifier 22.

In accordance with another embodiment, pump signals P₁, P₂ are designed to have wavelengths of 1465 nm and 1485 nm, respectively. In this case, the composite gain spectrum of amplifier 10 may be wider and flatter than gain spectrums of conventional amplifiers. Thus, using the techniques of the present invention, an optical amplifier having a gain bandwidth in excess of 40 nm may be provided.

A pump source (not shown) which provides pump signals P, P₂ could be a Raman fiber laser which generates an output signal having a wavelength typically of about 1480 nm. Alternatively, the pump source may be provided from two high-power laser diodes, each of which provides a signal having different output wavelengths in the band of 1420 nm to 1520 nm. The selection of a particular type of pump source depends upon a variety of factors including, but not limited to, the total output power desired from the optical amplifier 10.

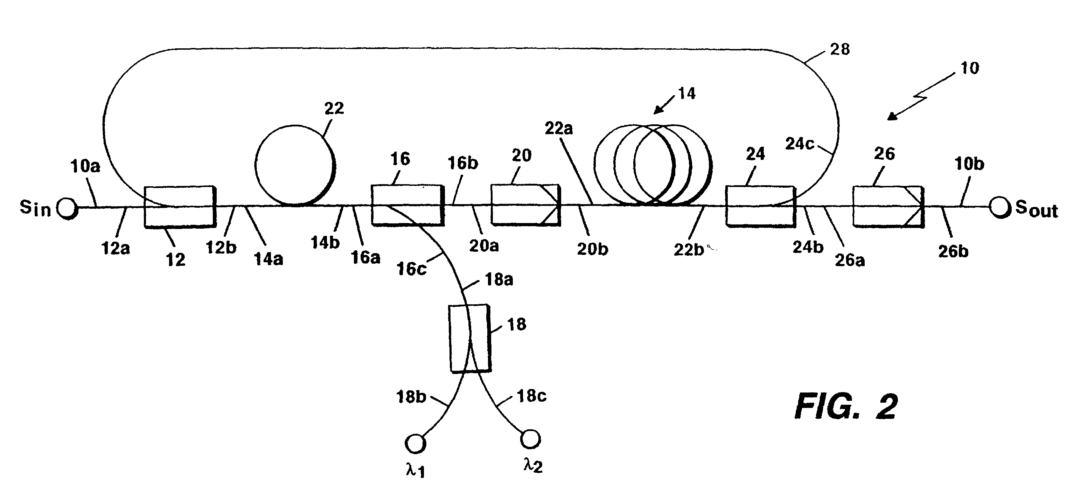

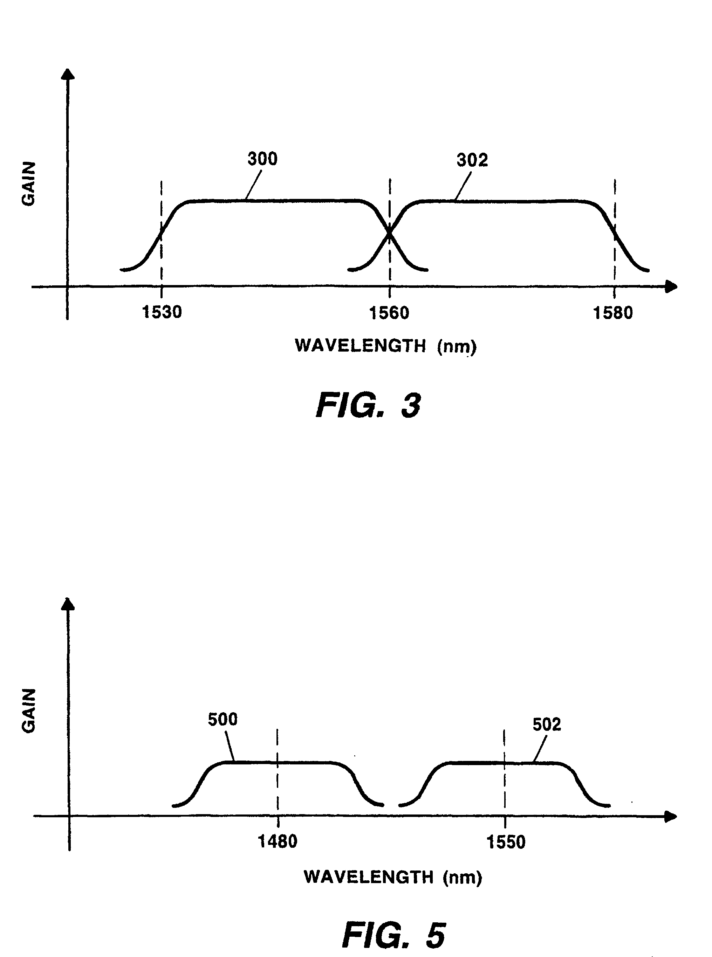

FIG. 2 illustrates a comparative example in which the first amplifier stage 14 is a rare earth doped fiber amplifier and the second amplifier stage 22 is a Raman amplifier. The pumping- arrangements are the same as shown in FIG. 1. This arrangement has similar properties to the amplifier shown in FIG. 1 but may have a better noise figure. The gain spectra of the amplifiers shown in FIGs. 1 and 2 are illustrated in FIG. 3 which shows the overlap in the spectra which can be obtained in accordance with one embodiment of the invention. In particular, the gain spectrum of the erbium amplifier extends from about 1530 nm to 1560 nm whereas the gain spectrum of the Raman amplifier can be adjusted to span from 1560 nm to 1580 nm. The result is a wider overall gain spectrum.

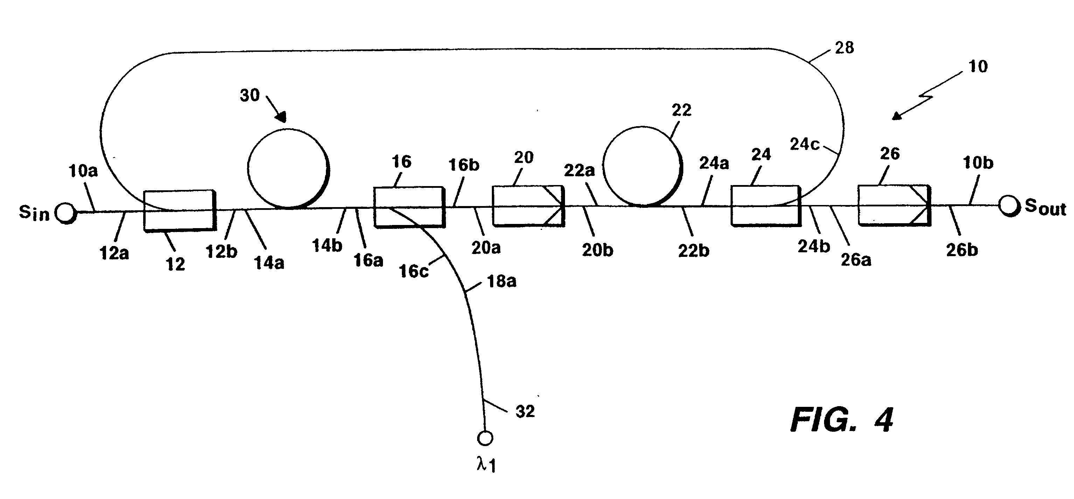

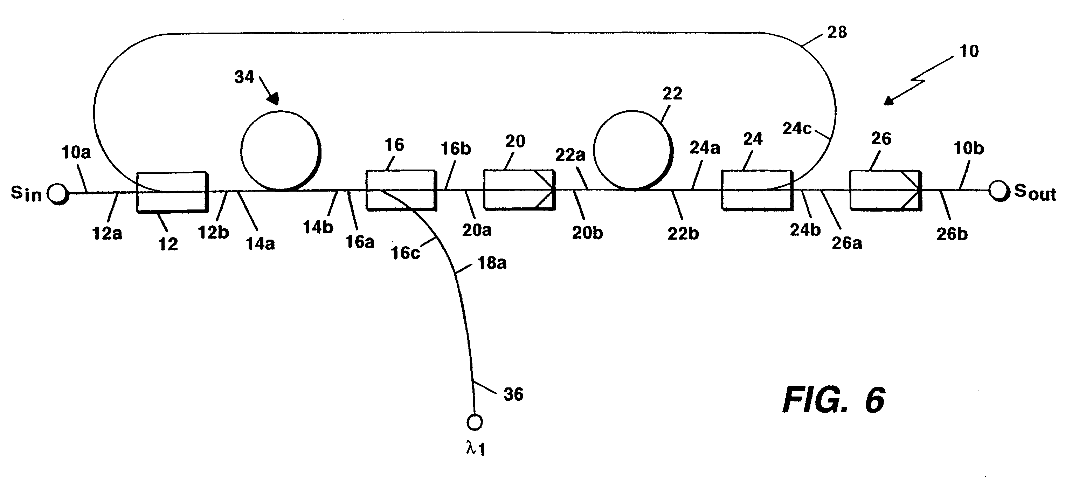

FIG. 4 is a block diagram of a comparative example of an optical amplifier in which both the first amplifier stage and the second amplifier stage are rare earth doped fiber amplifiers. Specifically, the first amplifier stage 30 is a fiber amplifier with a thulium doped ZBLAN core and the second stage 22 is an erbium/ytterbium doped fiber amplifier. The amplifier is pumped with pump signals 32 having a single frequency of 1.06 µm. The gain spectrum of such an amplifier is illustrated in FIG. 5. The thulium doped amplifier gain spectrum 500 is centered at 1.48 µm whereas the erbium/ytterbium spectrum 502 is centered at 1.55 µm. There is no overlap between the two spectra.

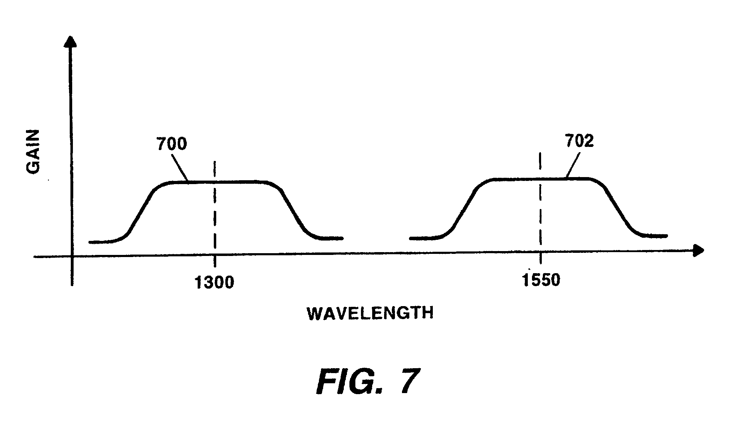

FIG. 6 is a block diagram of another comparative example of an optical amplifier in which the first amplifier stage 34 is a fiber amplifier with a praseodymium doped ZBLAN core and the second stage 22 is an erbium/ytterbium doped fiber amplifier. The amplifier is pumped with pump signals 36 having a single frequency of 1.04 µm. The gain spectrum of such an amplifier is illustrated in FIG. 7. The thulium doped amplifier gain spectrum 700 is centered at 1.3 µm whereas the erbium/ytterbium spectrum 702 is centered at 1.55 µm. There is no overlap between the two spectra.

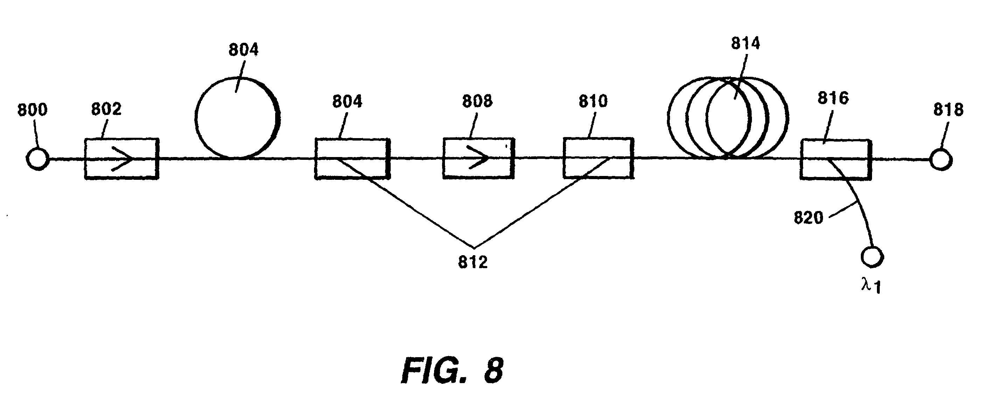

FIG. 8 illustrates still another comparative example in which an erbium amplifier 804 is coupled to a Raman amplifier 814. Specifically, the amplifier has an input port 800 which is connected, via an isolator 802, to the erbium amplifier 804. The signal output of the erbium amplifier 804 is connected by means of a first wave division multiplexer (WDM) 804, a second isolator 808 and a second WDM 810 to the signal input of Raman amplifier 814. The signal output of amplifier 814 is connected to output port 818 via WDM 816. Pump signals 820, for example, at 1480 nm, are applied via WDM 816 to the system and propagate in a direction opposite to the input signals in Raman amplifier 814.

The excess pump signal which remains after pumping Raman amplifier 814, is bypassed around isolator 808 by means of WDMS 810 and 804 and pumps erbium amplifier 804. The pump signal also propagates in a direction opposite to the input signals in amplifier 804. Although a single pumping frequency is shown in FIG. 8, two different frequencies can be used as described above.

Having described preferred embodiments of the invention, it will now become apparent to one of ordinary skill in the art that other embodiments incorporating their concepts may be used. For example, it should be noted that while, in a preferred embodiment, amplifier 10 includes isolator 20, in some applications isolator 20 may be omitted from amplifier 10. The removal of isolator 20 allows the excess pump signal counter-propagating through Er amplifier 22 to continue propagating through WDM 16 and into Raman amplifier 14. In general, this excess pump signal will adversely impact the noise performance of Raman amplifier 14, but, in some circumstances this will be acceptable. Similarly, removal of multistage isolator 20 may cause WDM 24 to receive back reflections from components coupled to amplifier output port 10b.

In addition the inventive multistage amplifier can be used in combination with other amplifiers. For example, the disclosed Raman/erbium-doped amplifier can be used as the second and third stage of a three stage amplifier. The erbium first stage can be coupled to the Raman/erbium-doped amplifier by an isolator.

## Claims

1. A multistage optical amplifier unit (10) comprising:
a first optical fiber amplifier stage (14) that amplifies an optical input signal to produce an intermediate signal with an optical power that is higher than that of the input signal,
a second optical fiber amplifier stage (22) that amplifies the intermediate signal to produce an output signal with an optical signal power higher than that of the intermediate signal; said second amplifier stage comprises a gain medium comprising one or more rare earth materials, and
a pump source,
**characterized in that**
the first amplifier stage comprises a Raman gain medium.

2. A multistage optical fiber amplifier unit according to claim 1, wherein the pump source comprises a single pump source used to pump both amplifier stages.

3. A multistage optical amplifier unit according to claims 1 or 2, wherein the first stage fiber amplifier (14) has a first end (14a) and a second end (14b) and the second fiber stage amplifier (22) has a first end (22a) optically coupled to the first stage fiber amplifier second end (14b) and a second end (22b); and which further comprises an optical fiber (28) optically coupling the first stage fiber amplifier first end (14a) to the second stage fiber amplifier second end (22b), so that unabsorbed pump signal at the first stage fiber amplifier first end (14a) is applied to the second stage fiber amplifier (22) to pump the second stage fiber amplifier, wherein the pump source is optically coupled to the first stage fiber amplifier second end (14b) for providing to the first stage fiber amplifier a pumping signal which pumps the first stage fiber amplifier as it propagates to the first stage fiber amplifier first end (14a).

4. A multistage optical amplifier unit according to claim 3, wherein an input signal is provided to the first stage fiber amplifier first end (14a) and propagates to the first stage fiber amplifier second end (14b) for amplification, and the pump signal propagates in a direction opposite to the input signal.

5. A multistage optical amplifier unit according to any of claims 1 to 4, wherein the first amplifier stage (14) has a first gain bandwidth that is different than a second gain bandwidth of the second amplifier stage (22).

6. A multistage optical amplifier according to claim 5, wherein the first gain bandwidth overlaps with the second gain bandwidth.

7. A multistage optical amplifier unit according to claim 6, wherein the overall gain of optical amplifier unit (10) is substantially uniform over a system gain bandwidth which is wider than each of the first and second gain bandwidths.

8. A multistage optical amplifier unit according to any of claims 1 to 7, wherein the first amplifier stage (14) comprises a low-noise amplifier and the second amplifier stage (22) comprises a high gain amplifier.

9. A multistage optical amplifier unit according to any of claims 1, 2, 4 to 8 further comprising:
two optical coupling paths (28, 20) formed between the first and second stage fiber amplifiers, a first coupling path (20) connecting the first and the second stage fiber amplifiers for providing the input signal as an input to the second stage fiber amplifier (22) from an output of the first stage fiber amplifier (14) and a second coupling path (28) providing for transfer of excess of the pumping power from the first stage fiber amplifier (14) to the second stage fiber amplifier (22) for pumping the second stage fiber amplifier.

10. A multistage optical amplifier unit according to claim 9 further comprising:
a first wave division multiplexer (12) having a first input port (12a) coupled to the input port (10a) of the multistage optical amplifier unit and having a second port (12b) coupled to the first port (14a) of the first amplifier stage (14);
a second wave division multiplexer (16) in the first coupling path (20) having a first port (16a) coupled to the second port (14b) of the first amplifier stage (14) and a second port (16b) coupled to the first port (22a) of the second amplifier stage (22);
a third wave division mutiplexer (24) having a first port (24a) coupled to the second port (22b) of the second amplifier stage (22) and a second port (24b) of the third wave division multiplexer coupled to the output port (10b) of the multistage optical amplifier unit,
whereby the second coupling path (28) couples a third port of the first wave division multiplexer (12) to a third port (24c) of the third wave division multiplexer (24).

11. A multistage optical amplifier unit according to any of claims 1 to 10, wherein a pump signal counter-propagates through the first amplifier stage (14) with a signal being amplified in the first stage, and an unabsorbed portion of the pump signal is directed to the second amplifier stage (22) such that it counter-propagates with a signal being amplified in the second stage.

12. A multistage optical amplifier unit according to any of claims 1 to 11, wherein the first amplifier stage (14) is pumped by the pump source in a manner that keeps it below its saturation level.

13. A multistage optical amplifier unit according to any of claims 1 to 12, further comprising a pump energy source that includes a plurality of pump sources coupled together.

## Patentansprüche

1. Mehrstufige optische Verstärkereinheit (10), die umfasst:
eine erste Lichtleitfaser-Verstärkerstufe (14), die ein optisches Eingangssignal verstärkt, um ein Zwischensignal mit einer optischen Leistung zu erzeugen, die höher als die des Eingangssignals ist,
eine zweite Lichtleitfaser-Verstärkerstufe (22), die das Zwischensignal verstärkt, um ein Ausgangssignal mit einer Leistung des optischen Signals zu erzeugen, die höher als die des Zwischensignals ist, wobei die zweite Verstärkerstufe ein Verstärkungsmedium umfasst, das eines oder mehrere Seltenerdmaterialien umfasst, und
eine Pumpquelle,
**dadurch gekennzeichnet, dass**:
die erste Verstärkerstufe ein Raman-Verstärkungsmedium umfasst.

2. Mehrstufige Lichtleitfaser-Verstärkereinheit nach Anspruch 1, wobei die Pumpquelle eine einzelne Pumpquelle umfasst, die verwendet wird, um beide Verstärkerstufen zu pumpen.

3. Mehrstufige optische Verstärkereinheit nach Anspruch 1 oder 2, wobei der Faserverstärker (14) der ersten Stufe ein erstes Ende (14a) sowie ein zweites Ende (14b) aufweist und der Faserverstärker der zweiten Stufe (22) ein erstes Ende (22a), das optisch mit dem zweiten Ende (14b) des Faserverstärkers der ersten Stufe gekoppelt ist, sowie ein zweites Ende (22b) aufweist, und die des Weiteren eine Lichtleitfaser (28) umfasst, die das erste Ende (14a) des Faserverstärkers der ersten Stufe mit dem zweiten Ende (22b) des Faserverstärkers der zweiten Stufe optisch koppelt, so dass ein nichtabsorbiertes Pumpsignal an dem ersten Ende (14a) des Faserverstärkers der ersten Stufe an den Faserverstärker (22) der zweiten Stufe angelegt wird, um den Faserverstärker der zweiten Stufe zu pumpen, wobei die Pumpquelle optisch mit dem zweiten Ende (14b) des Faserverstärkers der ersten Stufe gekoppelt ist, um dem Faserverstärker der ersten Stufe ein Pumpsignal zuzuführen, das den Faserverstärker der ersten Stufe pumpt, wenn es sich zu dem ersten Ende (14a) des Faserverstärkers der ersten Stufe ausbreitet.

4. Mehrstufige optische Verstärkereinheit nach Anspruch 3, wobei ein Eingangssignal dem ersten Ende (14a) des Faserverstärkers der ersten Stufe zugeführt wird und sich zur Verstärkung zu dem zweiten Ende (14b) des Faserverstärkers der ersten Stufe ausbreitet und sich das Pumpsignal in einer Richtung entgegengesetzt zu dem Eingangssignal ausbreitet.

5. Mehrstufige optische Verstärkereinheit nach einem der Ansprüche 1 bis 4, wobei die erste Verstärkerstufe (14) eine erste Verstärkungsbandbreite aufweist, die sich von einer zweiten Verstärkungsbandbreite der zweiten Verstärkerstufe (22) unterscheidet.

6. Mehrstufige optische Verstärkereinheit nach Anspruch 5, wobei sich die erste Verstärkungsbandbreite und die zweite Verstärkungsbandbreite überlappen.

7. Mehrstufige optische Verstärkereinheit nach Anspruch 6, wobei die Gesamtverstärkung der optischen Verstärkereinheit (10) im Wesentlichen über eine System-Verstärkungsbandbreite einheitlich ist, die jeweils breiter ist als die erste und die zweite Verstärkungs-Bandbreite.

8. Mehrstufige optische Verstärkereinheit nach einem der Ansprüche 1 bis 7, wobei die erste Verstärkerstufe (14) einen Verstärker mit niedrigem Eigenrauschen umfasst und die zweite Verstärkerstufe (22) einen Hochleistungsverstärker umfasst.

9. Mehrstufige optische Verstärkereinheit nach einem der Ansprüche 1, 2, 4 bis 8, die des Weiteren umfasst:
zwei optische Kopplungswege (28, 20), die zwischen den Faserverstärkem der ersten und der zweiten Stufe ausgebildet sind, wobei ein erster Kopplungsweg (20) die Faserverstärker der ersten und der zweiten Stufe verbindet, um dem Faserverstärker (22) der zweiten Stufe das Eingangssignal als einen Eingang von einem Ausgang des Faserverstärkers (14) der ersten Stufe zuzuführen, und ein zweiter Kopplungsweg (28) die Überführung von Überschuss der Pumpenergie von dem Faserverstärker (14) der ersten Stufe zu dem Faserverstärker (22) der zweiten Stufe bewirkt, um den Faserverstärker der zweiten Stufe zu pumpen.

10. Mehrstufige optische Verstärkereinheit nach Anspruch 9, die des Weiteren umfasst:
einen ersten Wellenteilungs-Multiplexer (12) mit einem ersten Eingangsanschluss (12a), der mit dem Eingangsanschluss (10a) der mehrstufigen optischen Verstärkereinheit gekoppelt ist, und einem zweiten Anschluss (12b), der mit dem ersten Anschluss (14a) der ersten Verstärkerstufe (14) gekoppelt ist;
einen zweiten Wellenteilungs-Multiplexer (16) auf dem ersten Kopplungsweg (20) mit einem ersten Anschluss (16a), der mit dem zweiten Anschluss (14b) der ersten Verstärkerstufe (14) gekoppelt ist, und einem zweiten Anschluss (16b), der mit dem ersten Anschluss (22a) der zweiten Verstärkerstufe (22) gekoppelt ist;
einen dritten Wellenteilungs-Multiplexer (24) mit einem ersten Anschluss (24a), der mit dem zweiten Anschluss (22b) der zweiten Verstärkerstufe (22) gekoppelt ist, und einem zweiten Anschluss (24b) des dritten Wellenteilungs-Multiplexers, der mit dem Ausgangsanschluss (10b) der mehrstufigen optischen Verstärkereinheit verbunden ist,
wobei der zweite Kopplungsweg (28) einen dritten Anschluss des ersten Wellenteilungs-Multiplexers (12) mit einem dritten Anschluss (24c) des dritten Wellenteilungs-Multiplexers (24) koppelt.

11. Mehrstufige optische Verstärkereinheit nach einem der Ansprüche 1 bis 10, wobei sich ein Pumpsignal entgegengesetzt zu einem Signal, das in der ersten Stufe verstärkt wird, durch die erste Verstärkungsstufe (14) ausbreitet, und ein nichtabsorbierter Teil des Pumpsignals zu der zweiten Verstärkerstufe (22) geleitet wird, so dass er sich entgegengesetzt zu einem Signal ausbreitet, das in der zweiten Stufe verstärkt wird.

12. Mehrstufige optische Verstärkereinheit nach einem der Ansprüche 1 bis 11, wobei die erste Verstärkerstufe (14) von der Pumpquelle so gepumpt wird, dass sie unter ihrem Sättigungspegel bleibt.

13. Mehrstufige optische Verstärkereinheit nach einem der Ansprüche 1 bis 12, die des Weiteren eine Pumpenergiequelle umfasst, die eine Vielzahl vom Pumpquellen enthält, die miteinander gekoppelt sind.

## Revendications

1. Unité d'amplification optique à étages multiples (10) comprenant :
un premier étage amplificateur à fibre optique (14) qui amplifie un signal d'entrée optique afin de produire un signal intermédiaire possédant une puissance optique plus élevée que celle du signal d'entrée,
un second étage amplificateur à fibre optique (22) qui amplifie le signal intermédiaire afin de produire un signal de sortie avec une puissance de signal optique plus élevée que celle du signal intermédiaire ; ledit second étage amplificateur comprenant un milieu de gain comprenant une ou plusieurs terres rares, et
une source de pompage,
**caractérisée en ce que**
le premier étage amplificateur comprend un milieu de gain Raman.

2. Unité d'amplification à fibre optique à étages multiples selon la revendication 1, dans laquelle la source de pompage comprend une seule source de pompage utilisée pour pomper les deux étages amplificateurs.

3. Unité d'amplification optique à étages multiples selon les revendications 1 ou 2, dans laquelle l'amplificateur à fibre du premier étage (14) possède une première extrémité (14a) et une seconde extrémité (14b) et l'amplificateur à fibre du second étage (22) possède une première extrémité (22a) couplée optiquement à la seconde extrémité de l'amplificateur à fibre du premier étage (14b) et une seconde extrémité (22b) ; et qui comprend en outre une fibre optique (28) couplant optiquement la première extrémité de l'amplificateur à fibre du premier étage (14a) à la seconde extrémité de l'amplificateur à fibre du second étage (22b), de sorte qu'un signal de pompage non absorbé au niveau de la première extrémité de l'amplificateur à fibre du premier étage (14a) soit appliqué à l'amplificateur à fibre du second étage (22) afin de pomper l'amplificateur à fibre du second étage, dans laquelle la source de pompage est couplée optiquement à la seconde extrémité de l'amplificateur à fibre du premier étage (14b) afin de délivrer à l'amplificateur à fibre du premier étage un signal de pompage qui pompe l'amplificateur à fibre du premier étage alors qu'il se propage vers la première extrémité de l'amplificateur à fibre du premier étage (14a).

4. Unité d'amplification optique à étages multiples selon la revendication 3, dans laquelle un signal d'entrée est fourni à la première extrémité de l'amplificateur à fibre du premier étage (14a) et se propage vers la seconde extrémité de l'amplificateur du premier étage (14b) pour être amplifié, et le signal de pompage se propage dans une direction opposée au signal d'entrée.

5. Unité d'amplification optique à étages multiples selon l'une quelconque des revendications 1 à 4, dans laquelle le premier étage amplificateur (14) possède une première bande passante de gain différente d'une seconde bande passante de gain du second étage amplificateur (22).

6. Unité d'amplification optique à étages multiples selon la revendication 5, dans laquelle la première bande passante de gain chevauche la seconde bande passante de gain.

7. Unité d'amplification optique à étages multiples selon la revendication 6, dans laquelle le gain total de l'unité d'amplification optique (10) est sensiblement uniforme sur une bande passante de gain de système, qui est plus large que chacune des première et seconde bandes passantes de gain.

8. Unité d'amplification optique à étages multiples selon l'une quelconque des revendications 1 à 7, dans laquelle le premier étage amplificateur (14) comprend un amplificateur à faible bruit et le second étage amplificateur (22) comprend un amplificateur à gain élevé.

9. Unité d'amplification optique à étages multiples selon l'une quelconque des revendications 1, 2, 4 à 8 comprenant en outre :
deux chemins de couplage optique (28, 20) formés entre les amplificateurs à fibre des premier et second étages, un premier chemin de couplage (20) connectant les amplificateurs à fibre des premier et second étages afin de fournir le signal d'entrée comme une entrée à l'amplificateur à fibre du second étage (22) à partir d'une sortie de l'amplificateur à fibre du premier étage (14) et un second chemin de couplage (28) permettant le transfert de l'excès de puissance de pompage de l'amplificateur à fibre du premier étage (14) à l'amplificateur à fibre du second étage (22) afin de pomper l'amplificateur à fibre du second étage.

10. Unité d'amplification optique à étages multiples selon la revendication 9, comprenant en outre :
un premier multiplexeur en longueur d'onde (12) possédant une première voie d'entrée (12a) couplée à la voie d'entrée (10a) de l'unité d'amplification optique à étages multiples et possédant une deuxième voie (12b) couplée à la première voie (14a) du premier étage amplificateur (14) ;
un deuxième multiplexeur en longueur d'onde (16) dans le premier chemin de couplage (20) possédant une première voie (16a) couplée à la deuxième voie (14b) du premier étage amplificateur (14) et une deuxième voie (16b) couplée à la première voie (22a) du second étage amplificateur (22) ;
un troisième multiplexeur en longueur d'onde (24) possédant une première voie (24a) couplée à la deuxième voie (22b) du second étage amplificateur (22) et une deuxième voie (24b) du troisième multiplexeur en longueur d'onde couplée à la voie de sortie (10b) de l'unité d'amplification optique à étages multiples,
en conséquence de quoi le second chemin de couplage (28) couple une troisième voie du premier multiplexeur en longueur d'onde (12) à une troisième voie (24c) du troisième multiplexeur en longueur d'onde (24).

11. Unité d'amplification optique à étages multiples selon l'une quelconque des revendications 1 à 10, dans laquelle un signal de pompage se propage en sens inverse dans le premier étage amplificateur (14) par rapport à un signal en cours d'amplification dans le premier étage, et une partie non absorbée du signal de pompage est dirigée vers le second étage amplificateur (22) de façon à se propager en sens inverse par rapport à un signal en cours d'amplification dans le second étage.

12. Unité d'amplification optique à étages multiples selon l'une quelconque des revendications 1 à 11, dans laquelle le premier étage amplificateur (14) est pompé par la source de pompage de manière à le conserver en dessous de son niveau de saturation.

13. Unité d'amplification optique à étage multiples selon l'une quelconque des revendications 1 à 12, comprenant en outre une source d'énergie de pompage qui comprend une pluralité de sources de pompage couplées les unes aux autres.
